(19) Europäisches Patentamt / European Patent Office / Office européen des brevets

(11) **EP 3 347 852 B1**

(12) **EUROPEAN PATENT SPECIFICATION**

(45) Date of publication and mention
of the grant of the patent:
**20.11.2019 Bulletin 2019/47**

(51) Int Cl.:
***H04N 19/50*** (2014.01)          ***G06K 9/00*** (2006.01)
***G06K 9/62*** (2006.01)

(21) Application number: **15763865.1**

(86) International application number:
**PCT/EP2015/070628**

(22) Date of filing: **09.09.2015**

(87) International publication number:
**WO 2017/041842 (16.03.2017 Gazette 2017/11)**

(54) **METHODS OF COMPRESSING AND DECOMPRESSING SPECTRAL DATA**

VERFAHREN ZUR KOMPRIMIERUNG UND DEKOMPRIMIERUNG VON SPEKTRALDATEN

PROCÉDÉS DE COMPRESSION ET DÉCOMPRESSION DE DONNÉES SPECTRALES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.07.2018 Bulletin 2018/29**

(73) Proprietor: **Planetek Hellas E.P.E.**
**151 25 Marousi (GR)**

(72) Inventor: **SYKAS, Dimitris**
**15351 Attiki (GR)**

(74) Representative: **Black, Diego**
**Withers & Rogers LLP**
**4 More London Riverside**
**London SE1 2AU (GB)**

(56) References cited:
**US-B1- 6 804 400**

• **QIAN DU ET AL: "A linear mixture analysis-based
compression for hyperspectal image analysis",
GEOSCIENCE AND REMOTE SENSING
SYMPOSIUN, 2000. PROCEEDINGS. IGARSS 200
0. IEEE 2000 INTERNATIONAL 24-28 JULY 2000,
PISCATAWAY, NJ, USA,IEEE, vol. 2, 24 July 2000
(2000-07-24), pages 585-587, XP010505800, ISBN:
978-0-7803-6359-5**
• **NIRMAL KESHAVA ET AL: "Spectral Unmixing",
IEEE SIGNAL PROCESSING MAGAZINE, IEEE
SERVICE CENTER, PISCATAWAY, NJ, US, vol.
19, no. 1, 1 January 2002 (2002-01-01), pages
44-57, XP011093745, ISSN: 1053-5888, DOI:
10.1109/79.974727**
• **ANTONIO PLAZA ET AL: "Spatial/Spectral
Endmember Extraction by Multidimensional
Morphological Operations", IEEE
TRANSACTIONS ON GEOSCIENCE AND
REMOTE SENSING, IEEE SERVICE CENTER,
PISCATAWAY, NJ, US, vol. 40, no. 9, 1 September
2002 (2002-09-01), XP011073226, ISSN:
0196-2892**
• **SEBASTIAN LOPEZ ET AL: "The Promise of
Reconfigurable Computing for Hyperspectral
Imaging Onboard Systems: A Review and
Trends", PROCEEDINGS OF THE IEEE, IEEE.
NEW YORK, US, vol. 101, no. 3, 1 March 2013
(2013-03-01) , pages 698-722, XP011494149,
ISSN: 0018-9219, DOI:
10.1109/JPROC.2012.2231391**

**Description**

Technical field

This invention relates to methods of processing spectral data, and, more specifically, to a method of processing spectral imaging and sounding data to allow for lossy to near-lossless compression and decompression.

Background of the invention

Remote sensing relates to the acquisition of information about objects without direct contact with the object, and consequently makes use of sensor technologies such as satellite imaging. Such images are often analysed in order to classify the materials of a scene, area and/or object which has been imaged.

Remote sensing applications typically use spectral and sounding sensors to collect information. Spectral sensors acquire imaging data across many wavelength bands of the electromagnetic spectrum and can acquire, for example, multispectral (multiple, discrete spectral bands), hyperspectral (narrow bands over a continuous spectral range) and ultraspectral (very finely resolved spectral bands) images. Radiometers are often used as sounding sensors to acquire atmospheric sounding data across a wide frequency range. Due to high spectral resolution, spectral and sounding sensors amass large quantities of data and invariably it is necessary to compress such data to facilitate storage and transmission before it is processed.

There is a need for reliable and efficient compression methodologies which result in a high compression ratio (wherein the uncompressed size is much greater than the compressed size such that the image has been compressed to a great extent) and a low level of information loss. Lower compression ratios are less desirable since the image will have been compressed to a lesser extent compared to the original, uncompressed image.

Compression methodologies can be categorized as either lossless, near-lossless or lossy. Lossless compression compresses the data without any loss of information, such that the decompressed data is identical to the initial data. At best, lossless compression can reduce the size of the original image by 3 to 5 times. Near-lossless methodologies may require alteration of some bytes of the original data but (advantageously) this alteration does not significantly affect the compressed data; typically the data loss is below the accuracy of the sensor capturing the data, i.e. the error introduced due to the accuracy of the sensor outweighs any error introduced due to data loss from using near lossless compression. Lossy and near-lossless compression compresses the data with loss of at least some data, such that the decompressed data is not identical to the initial. Lossy compression can reduce the size of the original image by 10 to 20 times or more, and therefore tend to have much higher compression ratios than the lossless methods. However, there is a trade-off between the compression ratio and the amount of information lost.

Given the compression ratios achievable through the use of lossy methodologies, lossy methodologies are appealing, particularly for the spectral and sounding data collected for remote sensing applications. However, existing lossy methodologies are not particularly suited to spectral and sounding data due to the relatively high level of data distortion. Additionally, lossy methodologies do not always allow for the compressed data to be processed (provided for by 'compressed sensing' features of near-lossless methodologies).

Since near-lossless and lossy compression techniques are computationally intensive, hardware with high processing capabilities and memory allocation is required, thereby limiting the applicability of such techniques.

It is an aim of the present invention to mitigate at least some of the above drawbacks.

Summary of the invention

According to a first aspect of the invention, there is provided a method for processing spectral data according to appended claim 1.

This process allows for the computationally-efficient processing of spectral data which can be compressed without significant data loss or distortion at a very high compression ratio. The processing of the data can be executed both on an embedded platform (for example, on-board a remote sensing satellite rather than at a base station) because the complexity of the compression process and the amount of memory required is reduced. The processing can also be executed on standard computer architecture (such as at a satellite ground station, or a typical workstation) using only a limited amount of memory due to the reduced complexity of the compression process.

According to a second aspect of the invention, there is provided a machine readable storage medium according to appended claim 9. Preferable features of the invention are defined in the appended dependent claims.

Brief description of the drawings

An exemplary embodiment of the invention will be described with reference to the following drawings in which:

Figure 1 is a flow diagram showing an overview of a method of processing hyperspectral images according to an embodiment of the invention;

Figure 2 is a flow diagram showing steps of a method according to an embodiment of the invention;

**Figure 3** is a graph showing the compression ratios according to number of iterations and number of spectral bands;

**Figure 4** is a flow diagram showing decompression steps of a method according to an embodiment of the invention.

Detailed description

A hyperspectral image can be considered as a series of images, where each image comprises narrow spectral band data. Accordingly, a hyperspectral image is often referred to as a data cube, where two dimensions of the cube are spatial and the third dimension is spectral. The spectral data in the spectral dimension contains spectral signatures, each of which indicates a known composition. Compositions which are spectrally 'pure' are called endmembers - because endmembers are spectrally pure they have a defined signature within a narrow set of spectral bands. The spectral data for least some pixels of the image may contain signatures relating to more than one endmember. The spectral image data may undergo an 'unmixing' process to determine the numbers of endmembers in the image, identify the endmembers and determine the proportion of each endmember in each pixel. A pixel of a spectral image is a two-dimensional spatial element having (as a pseudo third-dimension) associated spectral bands.

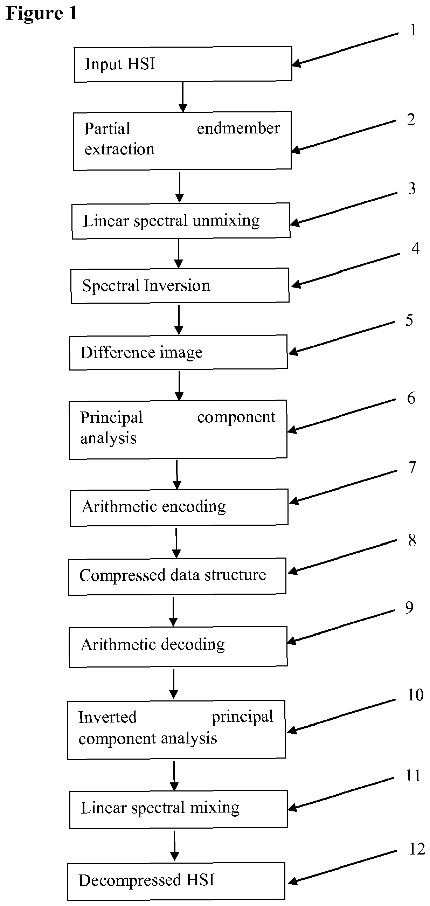

An overview of the compression/decompression process according to the invention is discussed with reference to Figure 1. Step 1 is the input of collected spectral image data or sounding data into the compression method. At step 2, endmember pixels are identified. The proportion of endmembers in each pixel is then estimated. To reduce the processing complexity required to estimate the proportion of each endmember in each pixel, only two endmembers are extracted, as will be discussed in further detail below. At step 3, the spectral data is linearly unmixed to estimate the proportion of each identified endmember in each pixel of the image. The differences between linear and non-linear mixing and unmixing will be accessible to a person skilled in the art.

At step 4, the estimated proportion of each endmember in each pixel is used to create an abundance image which is compared to the original by spectral inversion (subtraction of the abundance image pixel values from the original image pixel values). The result of the inversion is a difference image (step 5). At step 6, a principal component analysis (PCA) iteration is applied to the difference image. Only the first principal component is calculated for each iteration to advantageously reduce the processing burden of the method. The endmembers, abundance image and PCA variables for each iteration are encoded at step 7 and stored at step 8 as the compressed spectral image data.

The compressed data is decoded at step 9, and the PCA variables for each iteration are used to calculate a series of difference images at step 10. The abundance image and endmember data are mixed at step 11 to reconstruct the image. The reconstructed image is combined with the difference images to result in a decompressed image at step 12.

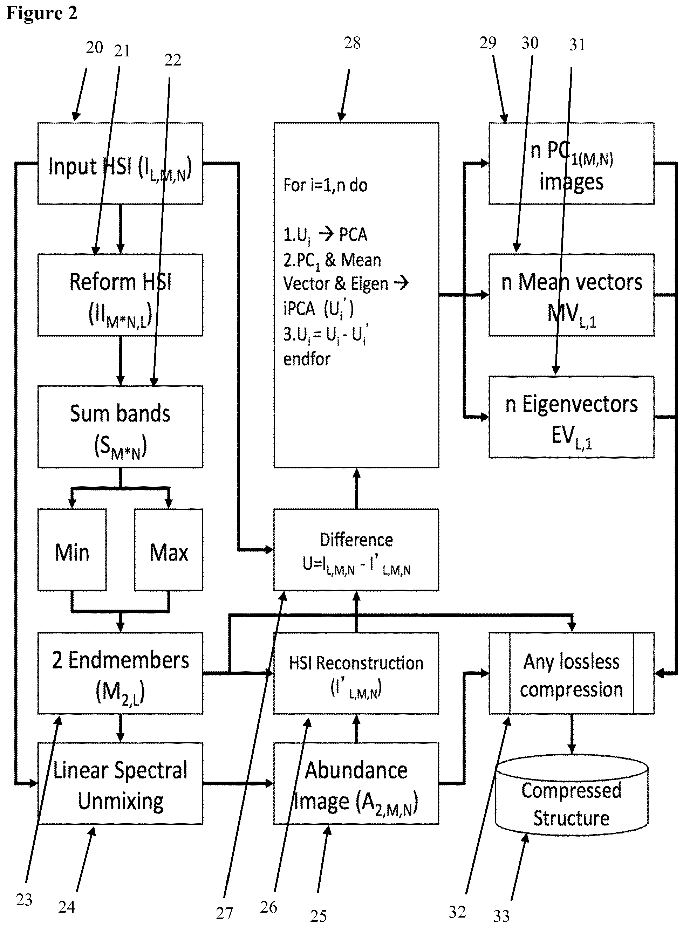

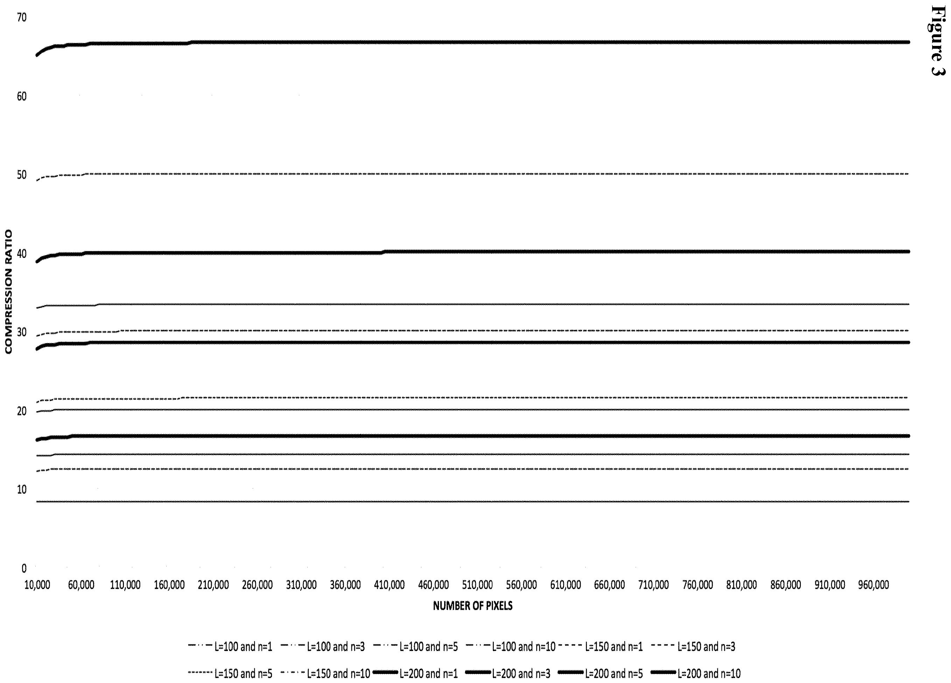

An embodiment of the invention will now be described with reference to Figure 2 and 3, which show more detailed methodology steps of the overview steps shown in Figure 1.

Figure 2 shows the compression process (generally denoted by steps 1-8 of figure 1) in detail.

Step 20 is the input of spectral (hereinafter HSI) image data (I). The image data I is defined by the number of rows of pixels (M) of the image, the number of columns of pixels (N) and the number of spectral bands (L). At step 21, the HSI data is rearranged via a rearrangement process such that the image I is defined by M*N and L. The rearrangement involves ordering the pixels sequentially according to the coordinates of the pixels, wherein the coordinates describe the column and row of the pixel. The sequence starts with a pixel corresponding to a first row and a first column, and is followed by a pixel corresponding to the first row and a second column. The pixels for the first row follow in sequence in order of column number. When the end of the first row is reached, the next pixel in the sequence is that corresponding to the second row and first column. The rearrangement process continues to put pixels in this sequence by adding pixels from each row in turn until all the M*N pixels have been processed. In other words, the spatial pixels of HSI data are rearranged with their corresponding spectral bands - advantageously, this simplifies the processing of each spatial pixel (with the corresponding spectral band), and hence reduces processing resources required by a computing device to perform the processing.

The mixed spectral signature of the HSI image is the convolution of an endmember matrix and an abundance fraction vector with residual noise. Each element in the endmember matrix is representative of the pixel brightness for a spectral band and an endmember. Mathematically the linear spectral mixing is described by equation 1 below:

$$R_{LX1} = M_{LXk} * a_{kX1} + U_{LX1} \qquad (1)$$

$R_{LX1}$ is the mixed spectral signature of the image, $M_{LXk}$ is the endmember matrix, $a_{kX1}$ is the abundance fraction vector and $U_{LX1}$ is the residual noise. The term $M_{LKk} * a_{kX1}$ describes most of the information of the recorded spectrum, while $U_{LX1}$ contains the noise of the data and a fraction of information not captured by the first term.

As mentioned above, only two endmembers are used for subsequent processing. The spectral bands across all pixels M*N are summed at step 22 - i.e. the numerical sum of the brightness values across all spectral bands is calculated for each spatial pixel. This summation is equivalent to calculating the spectral signature energy for each pixel. The two most extreme peaks in the spectrum are part of the spectral signature of two endmembers. The two pixels which comprise the minimum and maximum values will be, spectrally, the brightest and darkest pixels in the summed image data, identified at step 24. Therefore, by identifying the two pixels that have the maximum summed value and the minimum summed value, two (of the many) endmembers in the HSI data are identified.

Since an endmember represents a spectrally pure composition, any given spectral image will typically comprise multiple endmembers. Standard, known compression methods generally comprise the steps of estimating the number of endmembers in the image, identifying the endmembers and estimating the proportion of each endmember (i.e. an abundance fraction of each endmember) in each pixel of the image.

An example of such compression methods can be found in US patent US6804400 B1, published 12 October 2004.

In the methods described herein, only two out of the total number of endmembers are chosen for subsequent processing. Thus the present method does not require estimation of the number of endmembers, and, since two extreme endmembers (rather than all of the endmembers) are used, the process of identifying the endmembers (as described above) is significantly less complex, as are the calculations necessary to estimate the proportion, or abundance, of each endmember in each pixel of the image.

Identification of the endmembers and estimation of the proportion of each endmember in each pixel results in the unmixing of the image data (step 24) since the spectral data has been unmixed into two signatures of spectrally pure compositions or materials which can be used to represent the image data. The two endmembers are used to estimate the proportion of the compositions represented by the two endmembers in each pixel of the image. Although only two endmembers are used in the present process, the chosen endmembers allow for the approximation of a significant proportion of the signal of each pixel. To estimate the abundance of each composition represented by the two endmembers, preferably equation 1 is used under the condition that $U_{LX1}$ is set to 0, and $M_{LXk}$ contains only the two identified endmembers. The abundance fraction values (the proportion of the endmembers in each pixel) are used to create an abundance image at step 25. The abundance image in combination with the endmembers themselves is used to produce a reconstructed hyperspectral image at step 26 (for example by using a linear combination of the endmember values and the respective abundance fractions), which is compared with the original, input HSI image.

The difference between the original image and the reconstructed image is calculated at step 27 by subtracting the pixel values (i.e. brightness/intensity values) of the reconstructed image from the pixel values of the original image. This results in a difference image and is the difference in the spectral position of the pixels from the initial spectral space (as in the initial HSI image) to a sub-space which is defined by the endmembers which are not used to create the reconstructed image. The difference image represents both additional information that is not contained in the two identified endmembers, as well as residual noise.

Step 28 generally refers to iterative principal component analysis that is applied to the difference image. Since the difference image represents both the additional information not contained in the two identified endmembers and the residual noise, analysis of the difference image will allow for the reconstruction of the full or near-full signal. Principal component analysis (PCA) is a known technique for data analysis involving the determination of first, and, usually, subsequent principal components which account for the total variance of the data. PCA is a computationally burdensome iteration requiring, for each principal component, calculation of eigenvalues, and eigenvectors of the PCA function. In known techniques, PCA is applied to the spectral signatures. However, in the present case, PCA is applied to the difference image and only the first principal component is calculated, with the difference image used as the initial input. The first iteration results in a modified difference image and a principal component image. The modified difference image is subtracted from the initial difference image. The result of the subtraction is then the input for the next iteration. The spectral shape of the final difference image (i.e. the difference image left after all PCA iterations have been performed) represents white noise.

Subsequently, for each iteration, the principal component image 29, the mean vector 30 and the eigenvector 31 are stored. The difference between the input difference image and the subsequent modified difference image (i.e. the result of the PCA iteration) is calculated and the difference is used as input in the next iteration. The number of iterations is denoted by n. The higher the number of iterations, the higher the processing burden but the less information loss. Once the iteration has concluded, the endmembers, abundance image, principal component for each iteration 29, mean vectors for each iteration 30 and eigenvectors for each iteration 31 are stored at step 32 according to a lossless compression algorithm to result in a compressed data structure 33. For example, gzip lossless compression may be used, as could any suitable lossless compression algorithm.

The compression ratio of the compressed data structure is the ratio of the initial image volume (in bytes) to the compressed image volume (in bytes). The size of the initial image will be the product of the number of rows M, number of columns N and number of spectral bands L, which is then multiplied by the number of bits which are used to describe each pixel of the image divided by the number of bytes per pixel (for example, the number of bytes could be 8, 16, 32 etc.). The equation below provides the compression ratio CR in terms of the number of pixels in the image (Num) (which is N*M), the number of bands L, the number of PCA iterations n:

$$CR = \frac{Num*L}{Num*(n+2)+2*L(n+1)}$$

The variation of compression ratio with pixel number is shown in Figure 3. Thus the compression ratio is tied to the number of spectral bands (L) and the number of iterations (n) but not, significantly, to the number of pixels. The higher the spectral resolution (i.e. the larger the number of spectral bands), the higher the compression ratio and the lower the information loss. In some embodiments of the invention, CR is between 10 and 20 as a result of the near-lossless method described herein.

The more PCA iterations that are performed during compression, the more information is contained in the compressed structure (i.e. the more iterations are performed, the greater the similarity of the compressed image to the original unprocessed image). Noise data corresponds to values that cannot be described deterministically, and thus PCA cannot include them in the linear transformation included in the PCA process. In other words, PCA cannot model the structure of white noise. Accordingly, after a certain number PCA iterations, the residual will represent white noise. It has been found experimentally that 10 to 14 iterations is commonly sufficient that the residual represents pure white noise.

The compressed data can be processed further before decompression using a transformation matrix. The result of any processing using a transformation matrix will be the same as if the processing (without the transformation matrix) was applied to the data when decompressed.

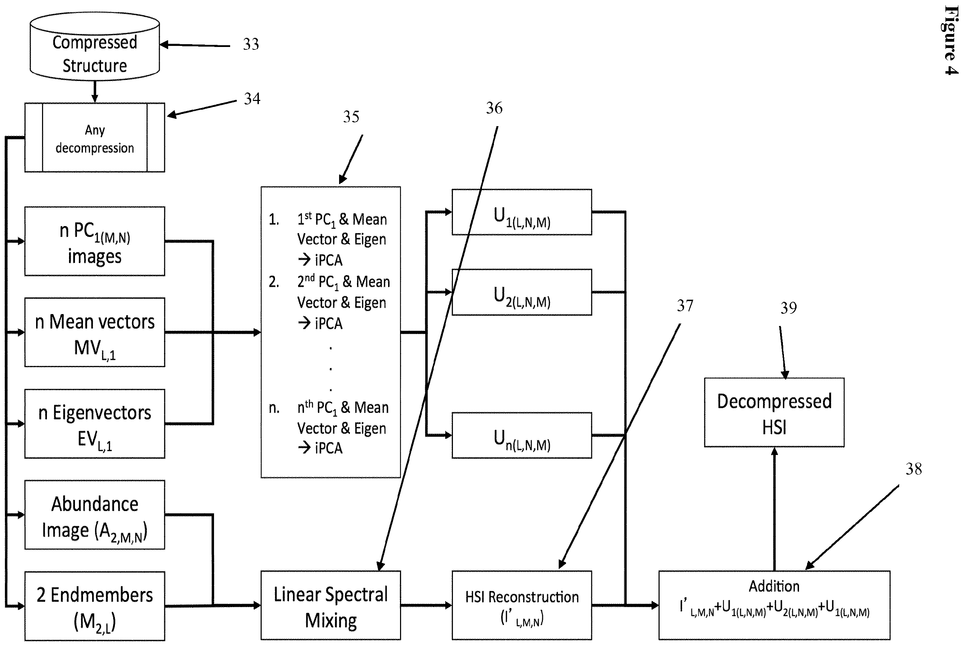

Figure 4 shows the decompression algorithm (generally denoted by steps 9-12 of figure 1). Decompression (for example gzip decompression, although any lossless decompression algorithm can be used) of the compressed structure 33 occurs at step 34 to extract the principal component image for each iteration, the mean vector for each iteration, the eigenvectors for each iteration, the abundance image and the two endmembers. The principal component images, mean vector and eigenvectors are used to recreate, for each iteration, difference images. This is shown generally at step 25. At step 26, the abundance image and the two endmembers undergo linear spectral mixing and an image based on the mixing is reconstructed at step 37. The reconstructed image and the difference images are combined at step 38 to result in final, decompressed HSI image data.

As discussed above, the PCA process used during compression results in at least part of the noise being defined by the residual, depending on the number of PCA iterations performed. Consequently, the decompressed image does not include at least part of the noise present in the original image, i.e. it does not include the noise described by the residual of the PCA. Thus, advantageously, by using a sufficient number of PCA iterations during compression (for example, 10 to 14 iterations), the decompressed image contains little or no white noise.

Although the invention has been described with reference to spectral imaging and video signals (in the case of video data, time frames can be considered to be equivalent to the "spectral information" in the discussion above), it can also be applied to limited-band imaging, such as imaging within the visible range. Moreover, any other type of data which have similar properties to spectral image data (e.g. have a high spectral resolution, such as sounding data) may also be processed according to the methodology described above.

**Claims**

1. A method for processing spectral image data, comprising:

   identifying two endmembers represented in the spectral image data,
   estimating abundance fraction values of the identified endmembers wherein the abundance fraction values are indicative of the proportion of the two identified endmembers in each pixel of the spectral image data,
   reconstructing the spectral image based on the estimated abundance fraction values and the identified endmembers,
   determining a difference image between the initial spectral image and the reconstructed image,
   applying principal component analysis -PCA- to the difference image, wherein applying PCA comprises performing one or more iterations of a PCA algorithm,
   storing a linear function and associated vectors generated by each iteration of the PCA algorithm,
   storing the abundance fraction values and endmembers,
   compressing the linear function and the associated vectors, the abundance image and the two identified endmembers.

2. The method of claim 1, wherein the step of applying principle component analysis comprises determining a first principal component only.

3. The method of claim 1 or 2, wherein the step of identifying the two endmembers comprises rearranging pixels of the spectral image data in sequential coordinate order.

4. The method of any preceding claim, further comprising constructing an abundance image based on the abundance fraction values.

5. The method of any preceding claim, wherein the two endmembers are extracted from the initial image data by calculating the spectral signature energy for each pixel and identifying the maximum and minimum values.

6. The method of any preceding claim, wherein the difference image represents information that is not contained in the two identified endmembers and residual noise.

7. The method of any preceding claim, wherein each PCA iteration results in a modified difference image and principal component image.

8. A method of processing images which have been compressed according to the method of any of claims 1-7, comprising
decompressing a stored linear function and associated vectors, abundance image and two endmembers,
reconstructing a difference image for each iteration using the stored linear function and associated vectors,
reconstructing a spectral image based on the abundance image and the two endmembers
combining the reconstructed spectral image and reconstructed difference images.

9. A computer readable storage medium comprising instructions which, when executed by a computer, perform the method of any preceding claim.

**Patentansprüche**

1. Verfahren zum Verarbeiten von spektralen Bilddaten, welches umfasst:

ein Identifizieren von zwei Endmitgliedern, die in den spektralen Bilddaten dargestellt sind,
ein Schätzen von Werten von Häufigkeitsanteilen der identifizierten Endmitglieder, wobei die Werte von Häufigkeitsanteilen den Anteil der identifizierten Endmitglieder in jedem Pixel der spektralen Bilddaten angeben,
ein Rekonstruieren des spektralen Bildes basierend auf den geschätzten Werten von Häufigkeitsanteilen und den identifizierten Endmitgliedern,
ein Bestimmen eines Differenzbildes zwischen dem anfänglichen spektralen Bild und dem rekonstruierten Bild,
ein Anwenden einer Hauptkomponentenanalyse, PCA, auf das Differenzbild, wobei das Anwenden der PCA ein Durchführen einer oder mehrerer Iterationen eines PCA-Algorithmus umfasst,
ein Speichern einer linearen Funktion und zugehöriger Vektoren, die durch jede Iteration des PCA-Algorithmus erzeugt werden,
ein Speichern der Werte von Häufigkeitsanteilen und der Endmitglieder,
ein Komprimieren der linearen Funktion und der zugehörigen Vektoren, des Häufigkeitsbildes und der beiden identifizierten Endmitglieder.

2. Verfahren nach Anspruch 1, wobei der Schritt des Anwendens einer Hauptkomponentenanalyse ein Bestimmen nur einer ersten Hauptkomponente umfasst.

3. Verfahren nach Anspruch 1 oder 2, wobei der Schritt des Identifizierens der beiden Endmitglieder ein Neuanordnen von Pixeln der spektralen Bilddaten in einer sequentiellen Koordinatenreihenfolge umfasst.

4. Verfahren nach einem der vorhergehenden Ansprüche, welches ferner ein Konstruieren eines Häufigkeitsbildes basierend auf den Werten von Häufigkeitsanteilen umfasst.

5. Verfahren nach einem der vorhergehenden Ansprüche, wobei die zwei Endmitglieder aus den anfänglichen Bilddaten durch ein Berechnen der spektralen Signaturenergie für jedes Pixel und ein Identifizieren der maximalen Werte und der minimalen Werte extrahiert werden.

6. Verfahren nach einem der vorhergehenden Ansprüche, wobei das Differenzbild Informationen darstellt, die nicht in den beiden identifizierten Endmitgliedern und dem Restrauschen enthalten sind.

7. Verfahren nach einem der vorhergehenden Ansprüche, wobei jede PCA-Iteration zu einem modifizierten Differenzbild und einem Hauptkomponentenbild führt.

8. Verfahren zum Verarbeiten von Bildern, die gemäß dem Verfahren nach einem der Ansprüche 1 bis 7 komprimiert worden sind, welches umfasst:

ein Dekomprimieren einer gespeicherten linearen Funktion und der zugehörigen Vektoren, des Überflussbildes und zweier Endmitglieder,
ein Rekonstruieren eines Differenzbildes für jede Iteration unter Verwendung der gespeicherten linearen Funktion und der zugehörigen Vektoren,
ein Rekonstruieren eines spektralen Bildes basierend auf dem Überflussbild und den beiden Endmitgliedern, und

ein Kombinieren des rekonstruierten spektralen Bildes und der rekonstruierten Differenzbilder.

9. Computerlesbares Speichermedium mit Anweisungen, die, wenn sie von einem Computer ausgeführt werden, das Verfahren nach einem der vorhergehenden Ansprüche ausführen.

**Revendications**

1. Procédé de traitement de données d'images spectrales, comprenant les étapes consistant à :

   identifier deux termes extrêmes représentés dans les données d'images spectrales,
   estimer les valeurs de fraction d'abondance des termes extrêmes identifiés, dans lequel les valeurs de fraction d'abondance sont indicatives de la proportion des deux termes extrêmes identifiés dans chaque pixel des données d'images spectrales,
   reconstruire l'image spectrale à partir des valeurs de fraction d'abondance estimées et des termes extrêmes identifiés,
   déterminer une image de différence entre l'image spectrale initiale et l'image reconstruite,
   appliquer une analyse en composantes principales (ACP) à l'image de différence, dans lequel l'application de l'ACP comprend la réalisation d'une ou de plusieurs itérations d'un algorithme ACP,
   stocker une fonction linéaire et les vecteurs associés générés par chaque itération de l'algorithme ACP,
   stocker les valeurs de fraction d'abondance et les termes extrêmes,
   compresser la fonction linéaire et les vecteurs associés, l'image d'abondance et les deux termes extrêmes identifiés.

2. Procédé selon la revendication 1, dans lequel l'étape consistant à appliquer l'analyse en composantes principales comprend la détermination d'une première composante principale uniquement.

3. Procédé selon la revendication 1 ou 2, dans lequel l'étape d'identification des deux termes extrêmes comprend l'étape consistant à réarranger les pixels des données d'images spectrales dans l'ordre des coordonnées séquentielles.

4. Procédé selon l'une quelconque des revendications précédentes, comprenant en outre la construction d'une image d'abondance basée sur les valeurs de fraction d'abondance.

5. Procédé selon l'une quelconque des revendications précédentes, dans lequel les deux termes extrêmes sont extraits des données d'image initiale en calculant l'énergie de la signature spectrale pour chaque pixel et en identifiant les valeurs maximale et minimale.

6. Procédé selon l'une quelconque des revendications précédentes, dans lequel l'image de différence représente des informations qui ne sont pas contenues dans les deux termes extrêmes identifiés et de bruit résiduel.

7. Procédé selon l'une quelconque des revendications précédentes, dans lequel chaque itération d'ACP résulte en une image de différence modifiée et une image de composante principale.

8. Procédé de traitement d'images qui ont été compressées selon le procédé de l'une quelconque des revendications 1-7, comprenant les étapes consistant à :

   décompresser une fonction linéaire stockée et les vecteurs associés, une image d'abondance et deux termes extrêmes,
   reconstruire une image de différence pour chaque itération en utilisant la fonction linéaire stockée et les vecteurs associés,
   reconstruire une image spectrale basée sur l'image d'abondance et les deux termes extrêmes
   combiner l'image spectrale reconstruite et les images de différence reconstruites.

9. Médium de stockage lisible par ordinateur comprenant des instructions qui, lorsqu'elles sont exécutées par un ordinateur, accomplissent le procédé selon l'une quelconque des revendications précédentes.

**Figure 1**

**Figure 2**

# Figure 3

Figure 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6804400 B1